# EUROPEAN PATENT APPLICATION

(11) **EP 1 783 924 A1**
(43) Date of publication of application: **09.05.2007**
(21) Application number: 04772084.2
(22) Date of filing: 24.08.2004
(51) Int. Cl.: H04B 5/02, H04B 1/59, G06K 17/00

(54) **DATA COMMUNICATION APPARATUS, DATA COMMUNICATION METHOD AND DATA COMMUNICATION SYSTEM**

(71) Applicant: MITSUBISHI ELECTRIC CORPORATION, Chiyoda-ku Tokyo 100-8310 (JP)
(72) Inventor: IIZUKA, Tsuyoshi MITSUBISHI ELECTRIC CORPORATION, Chiyoda-ku, Tokyo 1008310 (JP); KAMEMARU, Toshihisa MITSUBISHI ELECTRIC CORPORATION, Chiyoda-ku, Tokyo 1008310 (JP); HAYASHI, Ryoji MITSUBISHI ELECTRIC CORPORATION, Chiyoda-ku, Tokyo 1008310 (JP); TAKAHATA, Yasushi MITSUBISHI ELECTRIC CORPORATION, Tokyo 1008310 (JP)
(74) Representative: Pfenning, Meinig & Partner GbR
(86) International application number: PCT/JP2004/012123
(87) International publication number: WO 2006/021991

(57) **Abstract**

A data communication apparatus carries out SSB modulation of a radio frequency signal in response to the data addressed to a noncontact IC card 2, and transmits the single sideband modulated signal or the radio frequency signal. When receiving a double sideband modulated signal transmitted from the noncontact IC card 2 during the transmission of the radio frequency signal, the data communication apparatus demodulates data from the double sideband modulated signal. This makes it possible to demodulate the modulated signal transmitted from the noncontact IC card 2 correctly without being affected by the modulated signal transmitted from a second data communication apparatus 3.

## Description

### TECHNICAL FIELD

The present invention relates to a data communication apparatus, data communication method and data communication system for carrying out data communication with noncontact radio communication equipment (such as a noncontact IC card, RF tag, electronic tag, and remote keyless entry).

### BACKGROUND ART

A conventional data communication apparatus is composed of an ASK modulating circuit for carrying out ASK modulation of an RF signal or radio frequency signal and for outputting the modulated signal; an amplifier for amplifying the modulated signal output from the ASK modulating circuit; and an antenna for transmitting the modulated signal amplified by the amplifier to noncontact radio communication equipment.

The noncontact radio communication equipment, when located close to the data communication apparatus (at a distance of about several tens of centimeters to the data communication apparatus), receives a power supply signal (such as an RF signal) transmitted from the data communication apparatus, rectifies the power supply signal to obtain driving power, and stores the driving power in an internal capacitor.
After that, utilizing the power stored in the capacitor, the noncontact radio communication equipment can carry out processing such as demodulating data by receiving the modulated signal (such as a data signal like a command) transmitted from the data communication apparatus, and modulating an unmodulated signal transmitted from the data communication apparatus and transmitting the modulated signal (such as a data signal like a command) to the data communication apparatus (see Non-Patent Document 1, for example).

Thus, when receiving the modulated signal transmitted from the noncontact radio communication equipment, the data communication apparatus transmits a CW (unmodulated continuous wave: an RF signal, for example), a signal for response, to the noncontact radio communication equipment. In this case, when a second data communication apparatus is located at a place several kilometers from the data communication apparatus, it can receive a modulated signal (such as a data signal like a command) from the second data communication apparatus at the timing it receives the modulated signal (such as a data signal like a command) from the noncontact radio communication equipment.
When the data communication apparatus receives the modulated signal from the second data communication apparatus at the timing it receives the modulated signal from the noncontact radio communication equipment, the modulated signal can constitute an interference wave, thereby sometimes making it impossible to demodulate the modulated signal transmitted from the noncontact radio communication equipment correctly.

When a plurality of data communication apparatuses are installed and if the distances between them are short, different frequencies are normally assigned to prevent mutual interference. However, since the number of the assignable frequencies is limited, the same frequency must sometimes be assigned even when the mutual distances are about several kilometers.
Here, the distance that can prevent the mutual interference is about several tens of kilometers.

Non-Patent Document 1: MWE 2003 Microwave Workshop Digest, "Subminiature RFID Chip: Mu Chip", by Mitsuo Usami, Central Research Laboratory, Hitachi Ltd., published 2003, pp. 235-238.

With the foregoing configuration, the conventional data communication apparatus has a problem of being unable to demodulate the modulated signal transmitted from the noncontact radio communication equipment correctly, if it receives the modulated signal from the second data communication apparatus at the timing of receiving the modulated signal from the noncontact radio communication equipment. This is because the modulated signal from the second data communication apparatus constitutes the interference wave.

The present invention is implemented to solve the foregoing problem. Therefore it is an object of the present invention to provide a data communication apparatus, data communication method and data communication system capable of demodulating the modulated signal transmitted from the noncontact radio communication equipment correctly without being affected by the modulation wave transmitted from the second data communication apparatus.

### DISCLOSURE OF THE INVENTION

A data communication apparatus in accordance with the present invention is configured in such a manner that it carries out single sideband modulation of a radio frequency signal in response to a signal addressed to noncontact radio communication equipment, and transmits the single side modulated signal or the radio frequency signal; and that when receiving a double sideband modulated signal transmitted from the noncontact radio communication equipment during the transmission of the radio frequency signal, it demodulates data from the double sideband modulated signal.

Thus, compared with the case where the data communication apparatus transmits the double sideband modulated signal, the present invention offers an advantage of being able to demodulate the modulated signal transmitted from the noncontact radio communication equipment with mitigating the effect of the modulated signal transmitted from a second data communication apparatus, or with eliminating the effect completely.

### BRIEF DESCRIPTION OF THE DRAWINGS

FIG. 1 is a block diagram showing a configuration of a data communication system of an embodiment 1 in accordance with the present invention;
FIG. 2 is a block diagram showing a configuration of a data communication apparatus and noncontact IC card of the embodiment 1 in accordance with the present invention;
FIG. 3 is a block diagram showing an internal configuration of an SSB modulating circuit;
FIG. 4 is a block diagram showing an internal configuration of an SSB demodulating circuit;
FIG. 5 is a flowchart illustrating a data communication method of the embodiment 1 in accordance with the present invention;
FIG. 6 is a diagram illustrating spectral distribution;
FIG. 7 is a diagram illustrating spectral distribution;
FIG. 8 is a diagram illustrating processing contents of the SSB modulating circuit;
FIG. 9 is a diagram illustrating processing contents of the SSB modulating circuit;
FIG. 10 is a diagram illustrating processing contents of the SSB modulating circuit;
FIG. 11 is a block diagram showing an internal configuration of the SSB modulating circuit;
FIG. 12 is a diagram illustrating processing contents of the SSB modulating circuit;
FIG. 13 is a diagram illustrating processing contents of the SSB modulating circuit;
FIG. 14 is a diagram illustrating processing contents of the SSB modulating circuit;
FIG. 15 is a diagram illustrating channel spacing between individual data communication apparatuses;
FIG. 16 is a diagram illustrating channel spacing between individual data communication apparatuses; and
FIG. 17 is a diagram illustrating spectral distribution.

### BEST MODE FOR CARRYING OUT THE INVENTION

The best mode for carrying out the invention will now be described with reference to the accompanying drawings to explain the present invention in more detail.

### EMBODIMENT 1

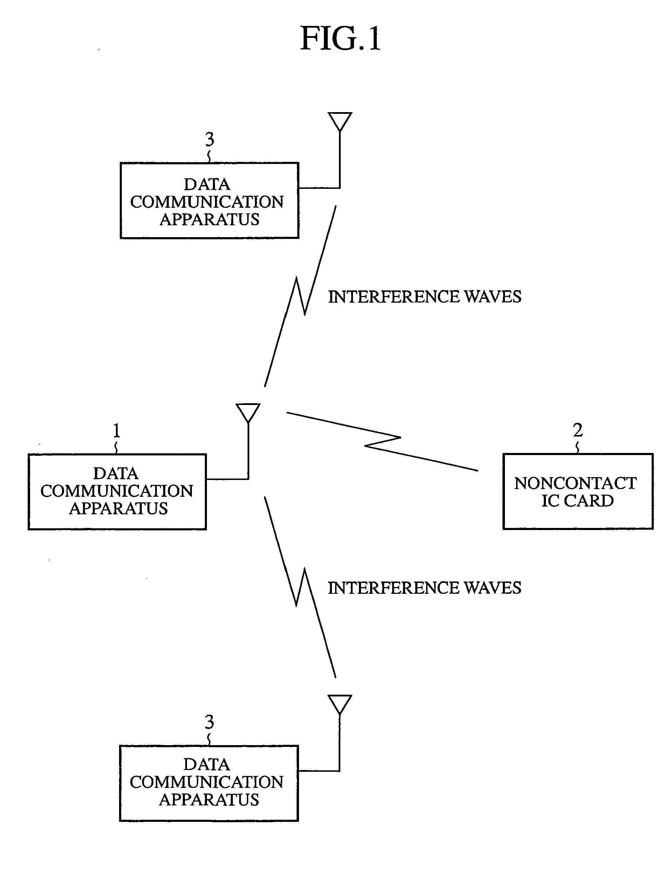

FIG. 1 is a block diagram showing a configuration of the data communication system of an embodiment 1 in accordance with the present invention.

In FIG. 1, the data communication apparatus 1, which corresponds to a reader-writer unit (interrogator), for example, transmits a power supply signal (CW: unmodulated continuous wave), a data signal (modulated wave) such as a command or a response signal (CW: unmodulated continuous wave) to a noncontact IC card 2.
Receiving the power supply signal transmitted from the data communication apparatus 1, the noncontact IC card 2, which is the noncontact radio communication equipment, charges the internal capacitor with the power supply signal. After that, utilizing the power stored in the capacitor, the noncontact IC card 2 carries out processing such as demodulating data by receiving a data signal (modulated signal) transmitted from the data communication apparatus 1, and modulating data addressed to the communication apparatus 1 and transmitting the modulated signal to the data communication apparatus 1.
Each data communication apparatus 3 is a data communication apparatus installed near the data communication apparatus 1. Each data communication apparatus 3 has the same configuration as the data communication apparatus 1.

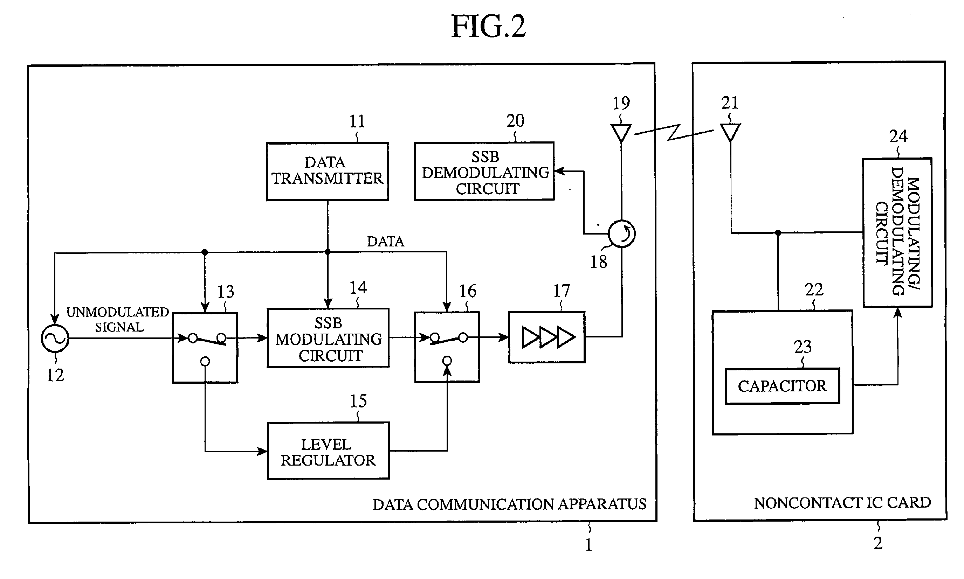

FIG. 2 is a block diagram showing a configuration of the data communication apparatus and noncontact IC card of the embodiment 1 in accordance with the present invention.
In FIG. 2, a data transmitter 11 of the data communication apparatus 1 outputs transmission data such as a command to be transmitted to the noncontact IC card 2, fixed form data for power supply, or fixed form data for response.
When the data output from the data transmitter 11 is the transmission data such as a command or the fixed form data for response, an RF signal oscillator 12 oscillates an unmodulated signal (radio frequency signal) with a frequency f₁. When the data output from the data transmitter 11 is the fixed form data for power supply, the RF signal oscillator 12 oscillates an unmodulated signal (radio frequency signal) with a frequency f₂. The RF signal oscillator 12 constitutes a radio frequency signal oscillating means.

When the data transmitter 11 outputs the transmission data, a changeover switch 13 supplies an SSB modulating circuit 14 with the unmodulated signal with frequency f₁ oscillated by the RF signal oscillator 12. On the other hand, when the data transmitter 11 outputs the fixed form data for power supply or fixed form data for response, the changeover switch 13 supplies a level regulator 15 with the unmodulated signal with frequency f₂ or the unmodulated signal with frequency f₁, which are oscillated by the RF signal oscillator 12.

The SSB modulating circuit 14 carries out SSB (Single SideBand) modulation of the unmodulated signal with frequency f₁ oscillated by the RF signal oscillator 12 in response to the transmission data output from the data transmitter 11, and outputs the single sideband modulated signal. The SSB modulating circuit 14 constitutes a modulating means.
The level regulator 15 adjusts the peak power of the unmodulated signal with frequency f₁ or frequency f₂ oscillated by the RF signal oscillator 12, and makes the peak power of the unmodulated signal greater than the peak power of the modulated signal output from the SSB modulating circuit 14.

When the data transmitter 11 outputs the transmission data, a changeover switch 16 supplies an amplifier 17 with the modulated signal output from the SSB modulating circuit 14. On the other hand, when the data transmitter 11 outputs the fixed form data for power supply or fixed form data for response, the changeover switch 16 supplies the amplifier 17 with the unmodulated signal output from the level regulator 15.
The amplifier 17 amplifies the modulated signal or unmodulated signal output from the changeover switch 16.

A circulator 18 supplies the modulated signal or unmodulated signal output from the amplifier 17 to the antenna 19, and supplies a double sideband modulated signal received by the antenna 19 to an SSB demodulating circuit 20.
The antenna 19 transmits the modulated signal or unmodulated signal amplified by the amplifier 17 to the noncontact IC card 2, and receives the double sideband modulated signal transmitted from the noncontact IC card 2. The circulator 18 and antenna 19 constitute a transmitting means and receiving means.
The SSB demodulating circuit 20 demodulates the data from the double sideband modulated signal received by the antenna 19. The SSB demodulating circuit 20 constitutes a demodulating means.

An antenna 21 of the noncontact IC card 2 receives the modulated signal or unmodulated signal transmitted from the data communication apparatus 1. If the signal received by the antenna 21 is the unmodulated signal with frequency f₂, a charging circuit 22 rectifies the unmodulated signal to obtain driving power, and stores the driving power in a capacitor 23.
A modulating/demodulating circuit 24 is driven by the power stored in the capacitor 23 of the charging circuit 22. If the signal received by the antenna 21 is the modulated signal with frequency f₁, the modulating/demodulating circuit 24 demodulates the data such as a command from the modulated signal, and carries out processing in response to the data. In addition, if the signal received by the antenna 21 is the unmodulated signal with frequency f₁, the modulating/demodulating circuit 24 modulates the unmodulated signal by the data addressed to the data communication apparatus 1, and supplies the modulated signal to the antenna 21.

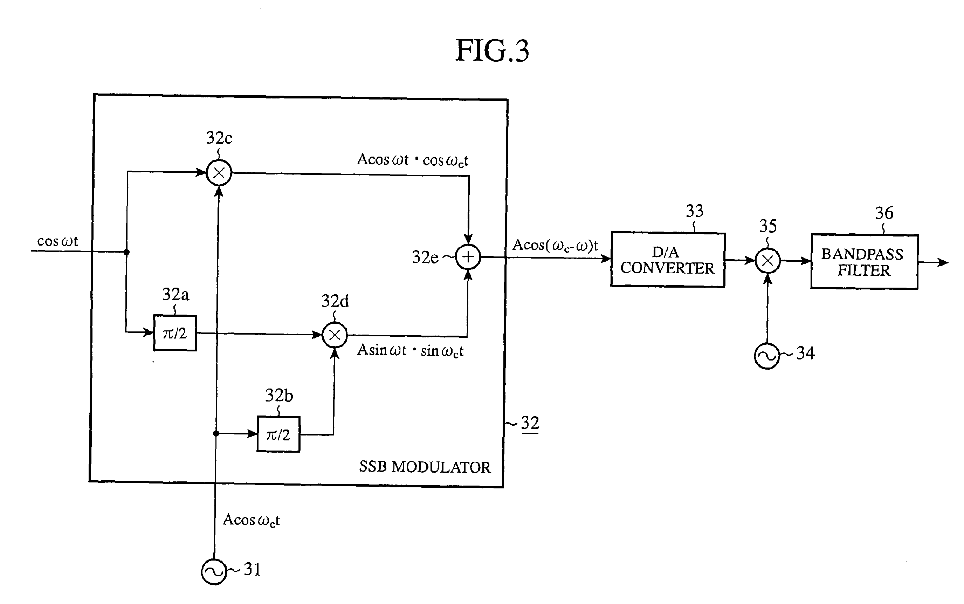

FIG. 3 is a block diagram showing a configuration of the SSB modulating circuit 14 configured in the form of a digital circuit. In FIG. 3, the local oscillator 31 oscillates a local oscillation signal of 10 MHz, for example. The SSB modulator 32, which is composed of 90-degree phase shifters 32a and 32b, multipliers 32c and 32d, and an adder 32e, carries out the SSB modulation of the local oscillation signal oscillated by the local oscillator 31 using the data output from the data transmitter 11, which is the digital signal.
A D/A converter 33 converts the digital modulated signal output from the SSB modulator 32 to an analog signal.

An RF signal oscillator 34 oscillates a radio frequency signal of 940 MHz, for example. A multiplier 35 multiplies the modulated signal passing through the D/A conversion by the D/A converter 33 and the radio frequency signal oscillated by the RF signal oscillator 34, and outputs the double sideband modulated signal.
A bandpass filter 36 eliminates a single sideband of the modulated signal output from the multiplier 35, and outputs the single sideband modulated signal.

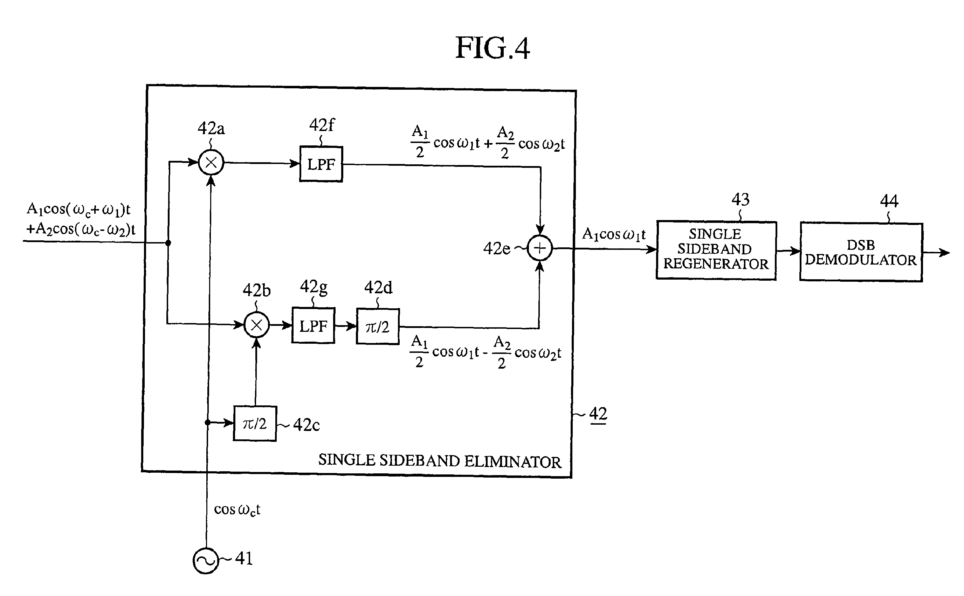

FIG. 4 is a block diagram showing an internal configuration of the SSB demodulating circuit 20. In FIG. 4, an RF signal oscillator 41 oscillates a radio frequency signal of 950 MHz, for example. A single sideband eliminator 42, which is composed of multipliers 42a and 42b, 90-degree phase shifters 42c and 42d, an adder 42e and low-pass filters 42f and 42g, eliminates the single sideband of the double sideband modulated signal received by the antenna 19 using the radio frequency signal oscillated by the RF signal oscillator 41.

A single sideband regenerator 43 regenerates from the modulated signal output from the single sideband eliminator 42 the single sideband removed by the single sideband eliminator 42, and outputs the double sideband modulated signal.
A DSB demodulator 44 carries out DSB (Double SideBand) demodulation of the double sideband modulated signal output from the single sideband regenerator, and demodulates the data addressed to itself.

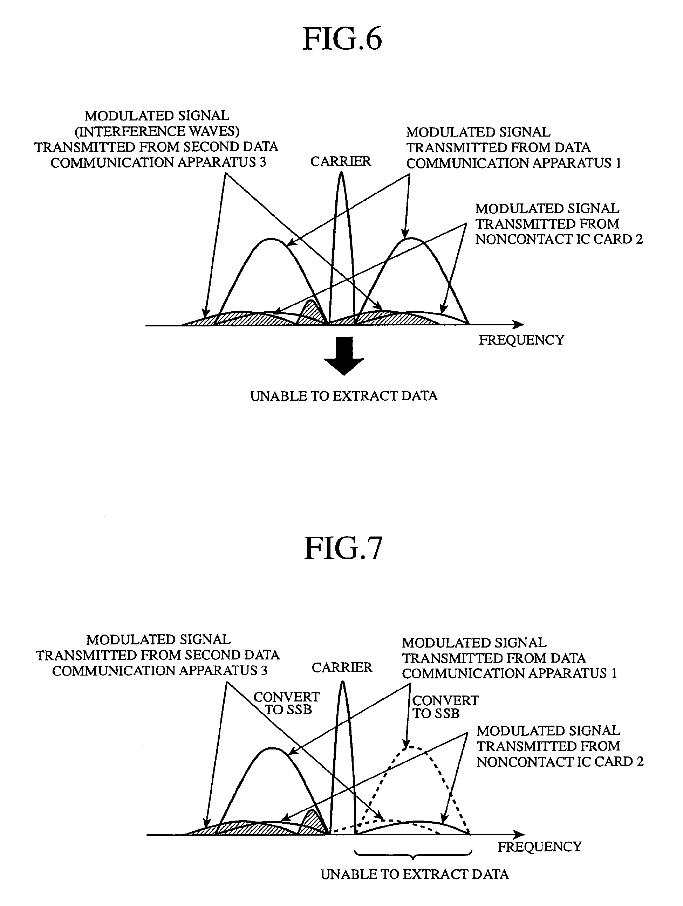

Next, the operation will be described.
As will be described later, in the present embodiment 1, when the data communication apparatus 1 or data communication apparatus 3 transmits the modulated signal, they transmit the single sideband modulated signal. In contrast, when they transmit the double sideband modulated signal as in the conventional example, two frequency bands on both sides of the radio frequency signal which is a carrier wave are occupied as illustrated in FIG. 6.

Under these circumstances, when the noncontact IC card 2 transmits data to the data communication apparatus 1, it transmits a double sideband modulated signal using approximately the same frequency band. Accordingly, if the second data communication apparatus 3 transmits a double sideband modulated signal at the timing the noncontact IC card 2 transmits the double sideband modulated signal to the data communication apparatus 1, the modulated wave becomes an interference wave, thereby deteriorating the receiving accuracy of the modulated signal from the noncontact IC card 2 by the data communication apparatus 1.

To prevent the modulated wave from becoming the interference wave even if the second data communication apparatus 3 transmits the modulated signal at the timing the noncontact IC card 2 transmits the double sideband modulated signal to the data communication apparatus 1, the present embodiment 1 converts the modulated signals transmitted by the data communication apparatus 1 and data communication apparatus 3 to a single sideband modulated signal as illustrated in FIG. 7.
This will be described in more detail.

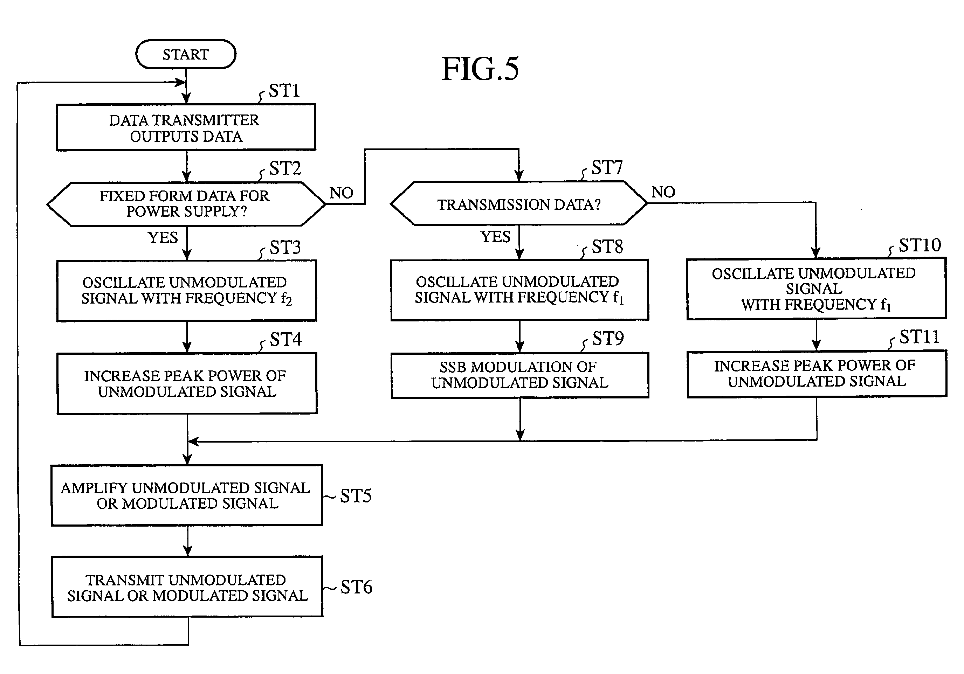

FIG. 5 is a flowchart illustrating the data communication method of the embodiment 1 in accordance with the present invention.
Since the noncontact IC card 2 does not include a power supply such as a battery, it cannot start its operation until it is supplied with power from outside.
Thus, before transmitting data such as a command, the data communication apparatus 1 supplies power to the noncontact IC card 2 in a noncontact condition.
Specifically, before transmitting data such as a command, the data transmitter 11 of the data communication apparatus 1 supplies the fixed form data for power supply to the RF signal oscillator 12, changeover switches 13 and 16 and SSB modulating circuit 14 (step ST1).

As for the fixed form data for power supply, since it is not meaningful data such as a control command and does not aim at transmitting information, any data contents are allowed.
However, it is preferably such data as clearly distinguishable from the transmission data such as a command or fixed form data for response.

Receiving the data from the data transmitter 11, the RF signal oscillator 12 of the data communication apparatus 1 checks whether the data is the fixed form data for power supply, or the transmission data such as a command, or the fixed form data for response (steps ST2 and ST7).
If the RF signal oscillator 12 recognizes that the data fed from the data transmitter 11 is the fixed form data for power supply, it oscillates an unmodulated signal with preassigned frequency f₂ (step ST3).

Receiving the data from the data transmitter 11, the changeover switch 13 of the data communication apparatus 1 checks whether the data is the fixed form data for power supply, or the transmission data such as a command, or the fixed form data for response.
If the changeover switch 13 recognizes that the data output from the data transmitter 11 is the fixed form data for power supply, it supplies the unmodulated signal with frequency f₂ oscillated by the RF signal oscillator 12 to the level regulator 15.

Receiving the unmodulated signal with frequency f₂ oscillated by the RF signal oscillator 12, the level regulator 15 of the data communication apparatus 1 adjusts the peak power of the unmodulated signal in such a manner as to become greater than the peak power of the modulated signal output from the SSB modulating circuit 14 (step ST4).
More specifically, the level regulator 15 regulates the peak power of the unmodulated signal oscillated by the RF signal oscillator 12 in such a manner that the peak power of the unmodulated signal for power supply becomes greater than the peak power of the modulated signal for data transmission.

Receiving the data from the data transmitter 11, the changeover switch 16 of the data communication apparatus 1 checks whether the data is the fixed form data for power supply, or the transmission data such as a command, or the fixed form data for response.
When the changeover switch 16 recognizes that the data output from the data transmitter 11 is the fixed form data for power supply, it supplies the unmodulated signal output from the level regulator 15 to the amplifier 17.

Receiving the unmodulated signal with frequency f₂ from the changeover switch 16, the amplifier 17 of the data communication apparatus 1 amplifies the unmodulated signal (step ST5).
Receiving the amplified unmodulated signal from the amplifier 17, the circulator 18 of the data communication apparatus 1 supplies the unmodulated signal to the antenna 19.
Receiving the amplified unmodulated signal from the circulator 18, the antenna 19 of the data communication apparatus 1 radiates the unmodulated signal into space as the signal for power supply, thereby transmitting the unmodulated signal to the noncontact IC card 2 (step ST6).

The antenna 21 of the noncontact IC card 2 receives the unmodulated signal with frequency f₂ transmitted from the data communication apparatus 1.
If the signal received by the antenna 21 is the unmodulated signal with frequency f₂, the charging circuit 22 of the noncontact IC card 2 rectifies the unmodulated signal to obtain the driving power, and stores the driving power in the capacitor 23.

Next, when the data communication apparatus 1 transmits data to the noncontact IC card 2, the data transmitter 11 of the data communication apparatus 1 supplies the transmission data such as a command to the RF signal oscillator 12, changeover switches 13 and 16 and SSB modulating circuit 14 (step ST1).
Receiving the data from the data transmitter 11, the RF signal oscillator 12 of the data communication apparatus 1 checks whether the data is the fixed form data for power supply, or the transmission data such as a command, or the fixed form data for response (steps ST2 and ST7).
When the RF signal oscillator 12 recognizes that the data output from the data transmitter 11 is the transmission data such as a command, it oscillates the unmodulated signal with preassigned frequency f₁ (step ST8).

Receiving the data from the data transmitter 11, the changeover switch 13 of the data communication apparatus 1 checks whether the data is the fixed form data for power supply, or the transmission data such as a command, or the fixed form data for response.
When the changeover switch 13 recognizes that the data output from the data transmitter 11 is the transmission data, it supplies the unmodulated signal with frequency f₁ oscillated by the RF signal oscillator 12 to the SSB modulating circuit 14.

Receiving the data from the data transmitter 11, the SSB modulating circuit 14 of the data communication apparatus 1 checks whether the data is the fixed form data for power supply, or the transmission data such as a command, or the fixed form data for response.
When the SSB modulating circuit 14 recognizes that the data output from the data transmitter 11 is the transmission data such as a command, it carries out SSB modulation of the unmodulated signal with frequency f₁ oscillated by the RF signal oscillator 12 in response to the transmission data output from the data transmitter 11, and supplies the single sideband modulated signal to the changeover switch 16 (step ST9).

The details of the processing of the SSB modulating circuit 14 are as follows.
Assume that the transmission data output from the data transmitter 11 is "cosωt", and the local oscillation signal oscillated by the local oscillator 31 is "Acosω_{c}t".
The 90-degree phase shifter 32a of the SSB modulator 32 advances the phase of the transmission data output from the data transmitter 11 by 90 degrees, thereby outputting "-sinωt".
The 90-degree phase shifter 32b of the SSB modulator 32 advances the phase of the local oscillation signal oscillated by the local oscillator 31 by 90 degrees, thereby outputting "-Asinω_{c}t".
Since it is rather difficult for the SSB modulator 32 to generate the 950 MHz band SSB modulated signal directly by a digital system, the local oscillator 31 oscillates the 10 MHz local oscillation signal here, for example.

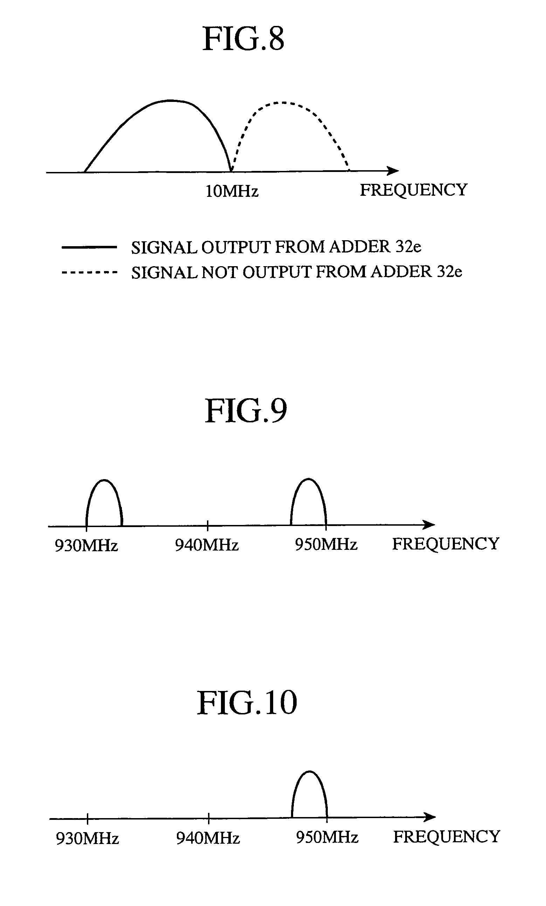

The multiplier 32c of the SSB modulator 32 multiplies the transmission data "cosωt" output from the data transmitter 11 and the local oscillation signal "Acosω_{c}t" oscillated by the local oscillator 31, and outputs the product "Acosωt·cosω_{c}t".
The multiplier 32d of the SSB modulator 32 multiplies "-sinωt" output from the 90-degree phase shifter 32a and "-Asinω_{c}t" output from the 90-degree phase shifter 32b, and outputs the product "Asinωt-sinω_{c}t".
The adder 32e of the SSB modulator 32 adds "Acosωt·cosω_{c}t" output from the multiplier 32c and "Asinωt·sinω_{c}t" output from the multiplier 32d, and generates a single sideband modulated signal (modulated signal with only the lower sideband without the upper sideband) "Acos(ω_{c}-ω)t" as illustrated in FIG. 8.

When the SSB modulator 32 generates the digital modulated signal, the D/A converter 33 converts the modulated signal to the analog signal.
Receiving the modulated signal passing through the D/A conversion by the D/A converter 33, the multiplier 35 multiplies the modulated signal by the radio frequency signal with 940 MHz, for example, oscillated by the RF signal oscillator 34, and outputs the 930 MHz modulated signal and 950 MHz modulated signal as illustrated in FIG. 9.
The bandpass filter 36 removes the 930 MHz modulated signal from the modulated signal output from the multiplier 35, and supplies the 950 MHz modulated signal (single sideband modulated signal) to the changeover switch 16 (see FIG. 10).

Receiving the data from the data transmitter 11, the changeover switch 16 of the data communication apparatus 1 checks whether the data is the fixed form data for power supply, or the transmission data such as a command, or the fixed form data for response.
When the changeover switch 16 recognizes that the data output from the data transmitter 11 is the transmission data such as a command, it supplies the single sideband modulated signal output from the SSB modulating circuit 14 to the amplifier 17.

Receiving the single sideband modulated signal from the changeover switch 16, the amplifier 17 of the data communication apparatus 1 amplifies the modulated signal (step ST5).
Receiving the amplified modulated signal from the amplifier 17, the circulator 18 of the data communication apparatus 1 supplies the modulated signal to the antenna 19.
Receiving the amplified modulated signal from the circulator 18, the antenna 19 of the data communication apparatus 1 radiates the modulated signal into space as the data signal, and transmits the modulated signal to the noncontact IC card 2 (step ST6).

The antenna 21 of the noncontact IC card 2 receives the single sideband modulated signal transmitted from the data communication apparatus 1.
When the antenna 21 receives the single sideband modulated signal, the modulating/demodulating circuit 24 of the noncontact IC card 2 drives itself using the power stored in the capacitor 23 of the charging circuit 22, carries out envelope detection of the single sideband modulated signal, demodulates the data such as a command from the modulated signal, and carries out processing in response to the data.

Next, when the data communication apparatus 1 receives the data from the noncontact IC card 2, the data transmitter 11 of the data communication apparatus 1 supplies the fixed form data for response to the RF signal oscillator 12, changeover switches 13 and 16 and SSB modulating circuit 14 (step ST1).
As for the fixed form data for response, since it is not meaningful data such as a control command, for example, and does not aim at transmitting information, any data contents are allowed. However, it is preferably such data as clearly distinguishable from the transmission data such as a command or fixed form data for power supply.

Receiving the data from the data transmitter 11, the RF signal oscillator 12 of the data communication apparatus 1 checks whether the data is the fixed form data for power supply, or the transmission data such as a command, or the fixed form data for response (steps ST2 and ST7).
If the RF signal oscillator 12 recognizes that the data fed from the data transmitter 11 is the fixed form data for response, it oscillates an unmodulated signal with preassigned frequency f₁ (step ST10).

Receiving the data from the data transmitter 11, the changeover switch 13 of the data communication apparatus 1 checks whether the data is the fixed form data for power supply, or the transmission data such as a command, or the fixed form data for response.
If the changeover switch 13 recognizes that the data output from the data transmitter 11 is the fixed form data for response, it supplies the unmodulated signal with frequency f₁ oscillated by the RF signal oscillator 12 to the level regulator 15.

Receiving the unmodulated signal with frequency f₁ oscillated by the RF signal oscillator 12, the level regulator 15 of the data communication apparatus 1 adjusts the peak power of the unmodulated signal in such a manner as to become greater than the peak power of the modulated signal output from the SSB modulating circuit 14 (step ST11).
More specifically, the level regulator 15 regulates the peak power of the unmodulated signal oscillated by the RF signal oscillator 12 in such a manner that the peak power of the unmodulated signal for response becomes greater than the peak power of the modulated signal for data transmission.

Receiving the data from the data transmitter 11, the changeover switch 16 of the data communication apparatus 1 checks whether the data is the fixed form data for the power supply, or the transmission data such as a command, or the fixed form data for response.
When the changeover switch 16 recognizes that the data output from the data transmitter 11 is the fixed form data for response, it supplies the unmodulated signal output from the level regulator 15 to the amplifier 17.

Receiving the unmodulated signal with frequency f₁ from the changeover switch 16, the amplifier 17 of the data communication apparatus 1 amplifies the unmodulated signal (step ST5).
Receiving the amplified unmodulated signal from the amplifier 17, the circulator 18 of the data communication apparatus 1 supplies the unmodulated signal to the antenna 19.
Receiving the amplified unmodulated signal from the circulator 18, the antenna 19 of the data communication apparatus 1 radiates the unmodulated signal into space as the signal for response, thereby transmitting the unmodulated signal to the noncontact IC card 2 (step ST6).

The antenna 21 of the noncontact IC card 2 receives the unmodulated signal with frequency f₁ transmitted from the data communication apparatus 1.
When the signal received by the antenna 21 is the unmodulated signal with frequency f₁, using the power stored in the capacitor 23 of the charging circuit 22, the modulating/demodulating circuit 24 of the noncontact IC card 2 drives itself, modulates the data addressed to the data communication apparatus 1, and supplies the modulated signal with frequency f₁ (double sideband modulated signal) to the antenna 21.
Thus, the double sideband modulated signal is transmitted from the noncontact IC card 2 to the data communication apparatus 1 as the data signal.

The antenna 19 of the data communication apparatus 1 receives the double sideband modulated signal, that is, the data signal transmitted from the noncontact IC card 2.
Thus, the antenna 19 receives the double sideband modulated signal, which is the data signal, at the timing of transmitting the unmodulated signal with frequency f₁, which is the signal for response.

When the antenna 19 of the data communication apparatus 1 receives the double sideband modulated signal, which is the data signal, the second data communication apparatus 3 may sometimes transmit the modulated signal. In this case, however, since the second data communication apparatus 3 transmits only the lower sideband modulated signal as illustrated in FIG. 7 (the data communication apparatus 3 has the same configuration as the data communication apparatus 1), the upper sideband modulated signal in the modulated signal transmitted from the noncontact IC card 2 does not interfere with the modulated signal transmitted from the second data communication apparatus 3.

The SSB demodulating circuit 20 of the data communication apparatus 1 demodulates the data from the double sideband modulated signal received by the antenna 19.
More specifically, the SSB demodulating circuit 20 demodulates the data from the upper sideband modulated signal in the modulated signal transmitted from the noncontact IC card 2, which does not interfere with the modulated signal transmitted from the second data communication apparatus 3.

Details of the processing of the SSB demodulating circuit 20 are as follows.
Assume that the double sideband modulated signal received by the antenna 19 is "A₁cos(ω_{c}+ω₁)t + A₂cos(ω_{c}-ω₂)t", and the radio frequency signal oscillated by the RF signal oscillator 41 is "cosω_{c}t".
The multiplier 42a of the single sideband eliminator 42 multiplies the double sideband modulated signal received by the antenna 19 and the radio frequency signal oscillated by the RF signal oscillator 41, and outputs the product "(A₁/2)cosω₁t + (A₂/2)cosω₂t".
The 90-degree phase shifter 42c of the single sideband eliminator 42 advances the phase of the radio frequency signal oscillated by the RF signal oscillator 41 by 90 degrees, and outputs "-sinω_{c}t".

The multiplier 42b of the single sideband eliminator 42 multiplies the double sideband modulated signal "A₁cos(ω_{c}+ω₁)t + A₂cos(ω_{c}-ω₂)t" received by the antenna 19 and the radio frequency signal "-sinω_{c}t" having undergone the phase lead of 90 degrees by the 90-degree phase shifter 42c, and outputs the product "(A₁/2)sinω₁t - (A₂/2)sinω₂t".
The 90-degree phase shifter 42d of the single sideband eliminator 42 advances the phase of the product "(A₁/2)sinω₁t - (A₂/2)sinω₂t" obtained by the multiplier 42a by 90 degrees, and outputs "(A₁/2)cosω₁t - (A₂/2)cosω₂t".
The adder 42e of the single sideband eliminator 42 adds the product output from the multiplier 42a and the output of the 90-degree phase shifter 42d, and outputs the modulated signal "A₁cosω₁t" from which the lower sideband of the modulated signal received by the antenna 19 is removed, and in which only the upper sideband is left.

Receiving the upper sideband modulated signal "Acosωt" from the single sideband eliminator 42, the single sideband regenerator 43 regenerates the lower sideband modulated signal by copying the waveform of the upper sideband modulated signal symmetrically to the lower sideband side, and outputs the double sideband modulated signal.
Receiving the double sideband modulated signal from the single sideband regenerator 43, the DSB demodulator 44 demodulates the data addressed thereto by carrying out the DSB demodulation of the double sideband modulated signal.

As is clear from the foregoing description, the present embodiment 1 is configured in such a manner that it carries out the SSB modulation of the radio frequency signal in accordance with the data addressed to the noncontact IC card 2, and transmits the single sideband modulated signal or the radio frequency signal; and that when receiving the double sideband modulated signal transmitted from the noncontact IC card 2 during the transmission of the radio frequency signal, it demodulates the data from the double sideband modulated signal. Accordingly, comparing with the case where the data communication apparatus transmits the double sideband modulated signal, the present embodiment 1 offers an advantage of being able to demodulate the modulated signal transmitted from the noncontact IC card 2 with mitigating the effect of the modulated signal transmitted from the second data communication apparatus 3, or with eliminating the effect completely.

In addition, the present embodiment 1 is configured in such a manner that it extracts the single sideband modulated signal from the double sideband modulated signal received by the antenna 19, and demodulates the data from the single sideband modulated signal. Thus, the present embodiment 1 offers an advantage of being able to demodulate the data from only the modulated signal that is free from interference by the modulated signal transmitted from the second data communication apparatus 3, thereby being able to carry out more accurate demodulation.

Although the present embodiment 1 is described by way of example in which the data communication apparatuses 1 and 3 transmit the lower sideband modulated signal, and demodulate the data from the upper sideband modulated signal in the double sideband modulated signal transmitted from the noncontact IC card 2, this is not essential. For example, the data communication apparatuses 1 and 3 can transmit the upper sideband modulated signal and demodulate the data from the lower sideband modulated signal in the double sideband modulated signal transmitted from the noncontact IC card 2.

Although the present embodiment 1 is described by way of example in which the SSB demodulating circuit 20 of the data communication apparatus 1 carries out the SSB demodulation of the double sideband modulated signal received by the antenna 19, this is not essential. For example, a configuration is also possible which demodulates the data by carrying out DSB demodulation of the double sideband modulated signal.
In this case, since the signal to be demodulated includes the lower sideband modulated signal that suffers interference from the modulated wave of the second data communication apparatus 3, the data demodulating accuracy deteriorates compared with the case of carrying out the SSB demodulation of the double sideband modulated signal received by the antenna 19. However, since the upper sideband modulated signal does not suffer interference, the data demodulating accuracy is improved as compared with the case where the second data communication apparatus 3 transmits the double sideband modulated signal.
The configuration of carrying out the DSB demodulation of the double sideband modulated signal received by the antenna 19 can simplify the configuration of the demodulating circuit of the data communication apparatus 1.

In addition, although the foregoing embodiment 1 is described by way of example in which when the data output from the data transmitter 11 is the transmission data such as a command or the fixed form data for response, the RF signal oscillator 12 oscillates the unmodulated signal with frequency f₁, it can oscillate unmodulated signals with different frequencies. For example, a configuration is also possible in which when the data output from the data transmitter 11 is the transmission data such as a command, the RF signal oscillator 12 oscillates the unmodulated signal with frequency f₁, and when the data output from the data transmitter 11 is the fixed form data for response, the RF signal oscillator 12 oscillates the unmodulated signal with frequency f₃.
Furthermore, although the foregoing embodiment 1 is described by way of example in which when the data output from the data transmitter 11 is the fixed form data for power supply, the RF signal oscillator 12 oscillates the unmodulated signal with frequency f₂, this is not essential. For example, as in the case where the data output from the data transmitter 11 is the transmission data such as a command or the fixed form data for response, the RF signal oscillator 12 can oscillate the unmodulated signal with frequency f₁.
In this case, it is possible to obviate the changeover switches 13 and 16, and the level regulator 15.

Although the present embodiment 1 is described by way of example in which the data communication apparatus 1 supplies power to the noncontact IC card 2, and the noncontact IC card 2 drives itself utilizing the power, the data communication apparatus 1 need not necessarily supply power to the noncontact IC card 2. For example, the noncontact IC card 2 can drive itself using second power (such as acquiring power from an internal battery).

### EMBODIMENT 2

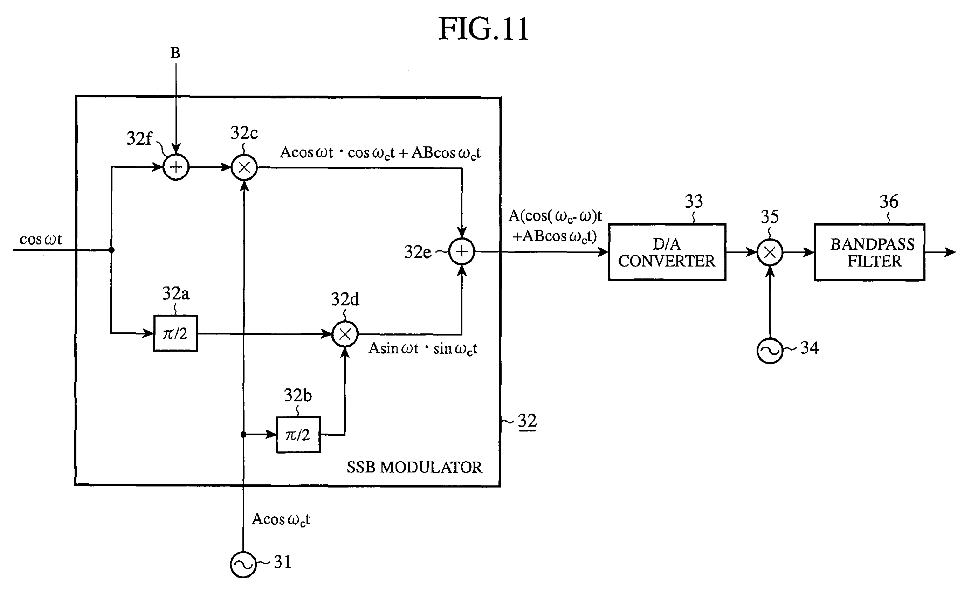

Although the foregoing embodiment 1 is described by way of example in which the SSB modulating circuit 14 supplies the single sideband modulated signal to the changeover switch 16, the SSB modulating circuit 14 can output the modulated signal along with the carrier component when supplying the single sideband modulated signal.
More specifically, as illustrated in FIG. 11, the adder 32f of the SSB modulating circuit 14 adds the transmission data "cosωt" output from the data transmitter 11 and a DC component "B", and supplies the addition result "cosωt + B" to the multiplier 32d, thereby causing the adder 32e of the SSB modulator 32 to output "A{cos(ω_{c}-ω)t + Bcosω_{c}t}".

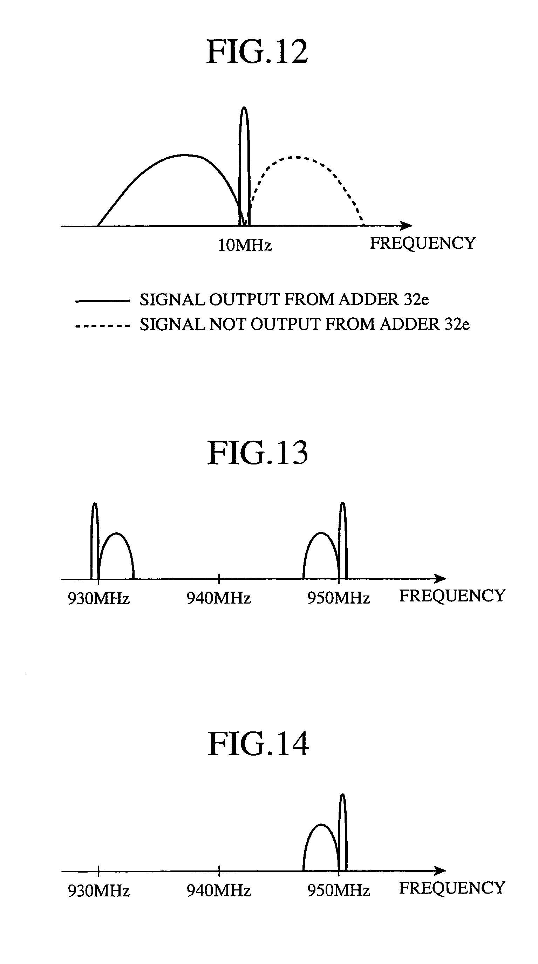

Thus, the adder 32e of the SSB modulator 32 outputs the signal including the carrier component at the frequency 10 MHz as illustrated in FIG. 12.
In addition, the multiplier 35 of the SSB modulating circuit 14 outputs the signal including the carrier component at the frequencies 930 MHz and 950 MHz as illustrated in FIG. 13.
Furthermore, the bandpass filter 36 of the SSB modulating circuit 14 outputs the signal including the carrier component at the frequency 950 MHz as illustrated in FIG. 14.

As is clear from the foregoing description, the present embodiment 2 is configured in such a manner that when the SSB modulating circuit 14 outputs the single sideband modulated signal, it outputs the carrier component along with the modulated signal. Accordingly, the present embodiment 2 offers an advantage of being able to demodulate the data such as a command from the modulated signal by carrying out envelope detection of the single sideband modulated signal, even when the modulating/demodulating circuit 24 of the noncontact IC card 2 is an ordinary circuit corresponding to the DSB modulation (not a circuit corresponding to the SSB modulation).

### EMBODIMENT 3

Although the foregoing embodiment 1 is described by way of example in which the data communication apparatus 1 and data communication apparatus 3 transmit the modulated signals of the same frequency, this is not essential. For example, to prevent the interference between the data communication apparatus 1 and data communication apparatus 3, the data communication apparatus 1 and data communication apparatus 3 can transmit the modulated signals with different frequencies. In other words, the RF signal oscillators 12 of the data communication apparatuses 1 and 3 may oscillate the radio frequency signals with different frequencies.

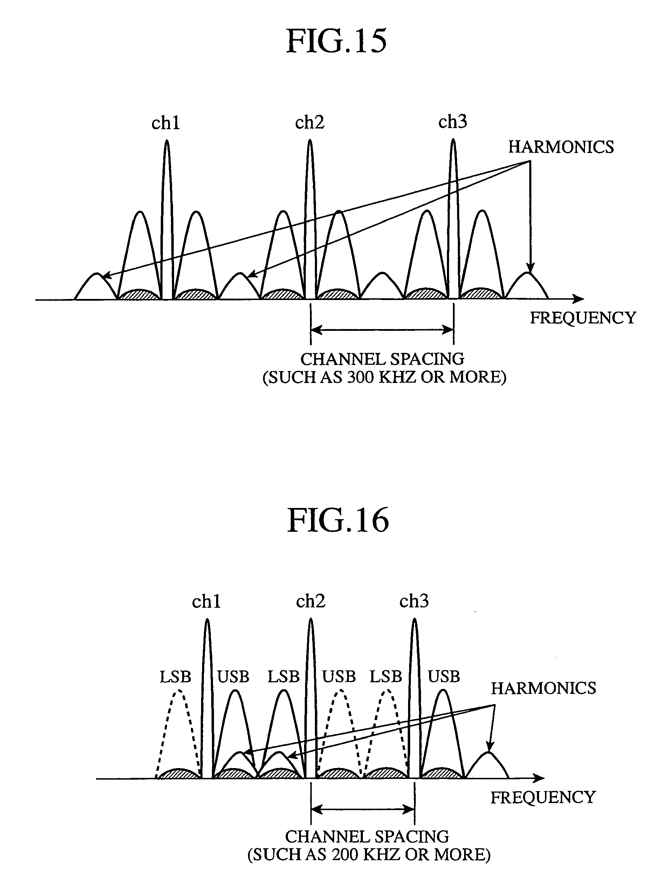

Even in the case where the data communication apparatus 1 and data communication apparatus 3 transmit the modulated signals with different frequencies, their harmonics are also transmitted when transmitting the modulated waves. Thus, as illustrated in FIG. 15, it is necessary to separate the channels by 300 kHz or more, for example. FIG. 15, however, illustrates a spectrum when the data transmitting apparatuses 1 and 3 transmit the double sideband modulated signal by carrying out the DSB modulation rather than the SSB modulation.
Therefore when a large number of data communication apparatuses 1 and 3 are used, the data communication system occupies an increasing frequency band. However, since the occupiable frequency band is limited in practice, unless the channel spacing between the individual data communication apparatuses is reduced, the number of establishable data communication apparatuses cannot be increased.
In view of this, the present embodiment 3 makes it possible to increase the number of the establishable data communication apparatuses by reducing the channel spacing between the individual data communication apparatuses.

More specifically, when the individual data communication apparatuses carry out the SSB modulation and transmit the single sideband modulated signals, the present embodiment 3 alternates the untransmitted single sidebands as illustrated in FIG. 16 (the ch1 data communication apparatus does not transmit the lower sideband modulated signal (LSB); the ch2 data communication apparatus does not transmit the upper sideband modulated signal (USB) ; and the ch3 data communication apparatus does not transmit the lower sideband modulated signal (LSB)), thereby making is possible to bring closer or to make common the response band from the noncontact IC card 2 in the adjacent channels.

More specifically, when the ch2 data communication apparatus transmits the lower sideband modulated signal (LSB) without transmitting the upper sideband modulated signal (USB), the ch3 data communication apparatus transmits the upper sideband modulated signal (USB) without transmitting the lower sideband modulated signal (LSB) as illustrated in FIG. 16 (under the assumption that the ch2 frequency < ch3 frequency, and the ch2 and ch3 have adjacent band frequencies).
In addition, the ch1 data communication apparatus also transmits the upper sideband modulated signal (USB) without transmitting the lower sideband modulated signal (LSB) (under the assumption that the ch1 frequency < ch2 frequency, and the ch1 and ch2 have adjacent band frequencies).

In this case, since harmonics do not appear in the response band from the noncontact IC card 2 in the ch2 and ch3, that is, in the USB of the ch2 and LSB of the ch3, it is not necessary to make space for the harmonics to occupy (100 kHz, for example). Thus, the spacing between the ch2 and ch3 can be reduced to about 200 kHz.
In addition, since the LSB of the ch2 and the USB of the ch1 are not the response band from the noncontact IC card 2 (the response band is the USB for the ch2 and the LSB for the ch1), even if they are brought closer to be used in common, this does not affect the response from the noncontact IC card 2. Thus, the spacing between the ch1 and ch2 can be reduced to about 200 kHz.

As is clear from the foregoing description, the present embodiment 3 is configured in such a manner that when the ch2 data communication apparatus transmits the lower sideband modulated signal (LSB) without transmitting the upper sideband modulated signal (USB), for example, the data communication apparatuses of the ch1 and ch3 transmit the upper sideband modulated signal (USB) without transmitting the lower sideband modulated signal (LSB). Thus, the present embodiment 3 offers an advantage of being able to reduce the channel spacing between the individual data communication apparatuses and increase the number of the establishable data communication apparatuses.

### EMBODIMENT 4

Although the foregoing embodiment 3 is described by way of example in which when the data communication apparatus of ch2 transmits the lower sideband modulated signal (LSB) without transmitting the upper sideband modulated signal (USB), the data communication apparatuses of ch1 and ch3 each transmit the upper sideband modulated signal (USB) without transmitting the lower sideband modulated signal (LSB), this is not essential. For example, in the data communication system, it is possible for the data communication apparatus to which the lowest radio frequency signal is assigned to transmit the upper sideband modulated signal (USB) without transmitting the lower sideband modulated signal (LSB), and for the data communication apparatus to which the highest radio frequency signal is assigned to transmit the lower sideband modulated signal (LSB) without transmitting the upper sideband modulated signal (USB).

This offers an advantage of being able to reduce the guard band width provided between the radio frequency band assigned to the data communication system and the radio frequency band adjacent to the radio frequency band for another use (such as for mobile phones), thereby increasing the communication band.

### EMBODIMENT 5

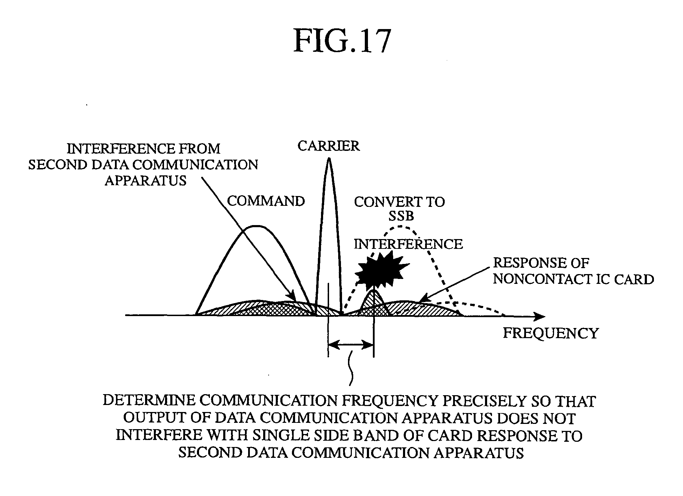

Although no mention is made in particular in the foregoing embodiment 1, when a rule is established which inhibits the transmission of the signal in the frequency band corresponding to the single sideband not transmitted by the second data communication apparatus, the individual data communication apparatuses are configured in such a manner as not to transmit the modulated signal or radio frequency signal in the frequency band.
This offers an advantage of being able to prevent the individual data communication apparatuses from interfering with the responses addressed from the noncontact IC card 2 to the second data communication apparatus as illustrated in FIG. 17.

### INDUSTRIAL APPLICABILITY

As described above, the data communication apparatus in accordance with the present invention is suitable for the application to noncontact radio communication equipment which does not include a power supply such as a battery, and cannot start unless it receives power supply from outside.

## Claims

1. A data communication apparatus comprising:
radio frequency signal oscillating means for oscillating a radio frequency signal;
modulating means for carrying out, in response to data addressed to noncontact radio communication equipment, single sideband modulation of the radio frequency signal oscillated by said radio frequency signal oscillating means, and for outputting a single sideband modulated signal;
transmitting means for transmitting the modulated signal output from said modulating means or the radio frequency signal oscillated by said radio frequency signal oscillating means;
receiving means for receiving a double sideband modulated signal transmitted from the noncontact radio communication equipment when said transmitting means transmitting the radio frequency signal; and
demodulating means for demodulating data from the modulated signal received by said receiving means.

2. The data communication apparatus according to claim 1, wherein said modulating means comprises:
a single sideband modulator for carrying out single sideband modulation of a digital signal representing the data addressed to the noncontact radio communication equipment by means of a digital circuit;
a D/A converter for converting a digital modulated signal output from said single sideband modulator to an analog signal;
a multiplier for multiplying the radio frequency signal by the modulated signal passing through conversion by said D/A converter; and
a filter for eliminating a single sideband from a product signal output from said multiplier.

3. The data communication apparatus according to claim 1, wherein
said demodulating means extracts the single sideband modulated signal from the double sideband modulated signal received by said receiving means, and for demodulating the data from the single sideband modulated signal.

4. The data communication apparatus according to claim 3, wherein
said demodulating means extracts, when the modulated signal output from said modulating means is an upper sideband modulated signal, a lower sideband modulated signal from the double sideband modulated signal received by said receiving means; and extracts, when the modulated signal output from said modulating means is a lower sideband modulated signal, an upper sideband modulated signal from the double sideband modulated signal received by said receiving means.

5. The data communication apparatus according to claim 3, wherein said demodulating means comprises:
a single sideband eliminator for eliminating a single sideband from the double sideband modulated signal received by said receiving means, and for outputting a single sideband modulated signal;
a single sideband regenerator for regenerating the single sideband eliminated by said single sideband eliminator from the modulated signal output from said single sideband eliminator, and for outputting a double sideband modulated signal; and
a data demodulator for demodulating the data from the double sideband modulated signal output from said single sideband regenerator.

6. The data communication apparatus according to claim 1, wherein
said modulating means outputs, when outputting the single sideband modulated signal, a carrier component along with the modulated signal.

7. A data communication method comprising:
carrying out single sideband modulation of a radio frequency signal in response to data addressed to noncontact radio communication equipment, and transmitting a single sideband modulated signal or the radio frequency signal; and
demodulating, when receiving a double sideband modulated signal from the noncontact radio communication equipment during transmission of the radio frequency signal, data from the double sideband modulated signal.

8. A data communication system comprising:
a data communication apparatus for carrying out single sideband modulation of a radio frequency signal in response to target data and for transmitting a single sideband modulated signal or the radio frequency signal, and for demodulating, when receiving a double sideband modulated signal during transmission of the radio frequency signal, data from the double sideband modulated signal; and
noncontact radio communication equipment for demodulating, when receiving the single sideband modulated signal transmitted from said data communication apparatus, the data from the modulated signal, and for carrying out double sideband modulation of data addressed to said data communication apparatus when receiving the radio frequency signal transmitted from said data communication apparatus, and for transmitting the double sideband modulated signal to said data communication apparatus.

9. The data communication system according to claim 8, wherein
when a plurality of data communication apparatuses are installed, the individual data communication apparatuses are assigned radio frequency signals with frequencies different from each other.

10. The data communication system according to claim 9, wherein
each of the data communication apparatuses transmits, when a second data communication apparatus to which a radio frequency signal of an adjacent band is assigned transmits an upper sideband modulated signal without transmitting a lower sideband modulated signal, the lower sideband modulated signal without transmitting the upper sideband modulated signal; and transmits, when the second data communication apparatus transmits the lower sideband modulated signal without transmitting the upper sideband modulated signal, the upper sideband modulated signal without transmitting the lower sideband modulated signal.

11. The data communication system according to claim 9, wherein
the data communication apparatus to which the lowest radio frequency signal is assigned transmits the upper sideband modulated signal without transmitting the lower sideband modulated signal, and the data communication apparatus to which the highest radio frequency signal is assigned transmits the lower sideband modulated signal without transmitting the upper sideband modulated signal.

12. The data communication system according to claim 8, wherein
the individual data communication apparatuses do not transmit a signal of a frequency band corresponding to a single sideband not transmitted by the second data communication apparatus.
